# EUROPEAN PATENT APPLICATION

(11) **EP 3 415 559 A1**
(43) Date of publication of application: **19.12.2018**
(21) Application number: 17175792.5
(22) Date of filing: 13.06.2017
(51) Int. Cl.: C08K 3/22, C08L 71/00, C08L 81/06, B29C 64/153

(54) **COMPOSITE MATERIAL AND ITS USE IN ADDITIVE MANUFACTURING METHODS**

(71) Applicant: Lehmann & Voss & Co. KG, 20354 Hamburg (DE)
(72) Inventor: Vandrich, Holger, 21217 Seevetal (DE); Rechberger, Marcus, 22359 Hamburg (DE)
(74) Representative: Von Rohr Patentanwälte Partnerschaft mbB

(57) **Abstract**

The present invention relates to a composite material comprising at least one thermoplastic polymer and a particulate inorganic material and its use in additive manufacturing methods.

## Description

The present invention relates to the technical field of additive manufacturing.

Particularly, the present invention relates to a new composite material and its use in additive manufacturing methods for the production of shaped articles.

Furthermore, the present invention relates to a process for preparing the composite material according to the invention.

Moreover, the present invention relates to a shaped article obtained by processing the inventive composite material.

Finally, the present invention relates to a process for obtaining a shaped article.

Additive manufacturing (AM) refers to a variety of processes for creating three-dimensional objects from liquids or powders. Usually, additive manufacturing - often synonymously called 3D-printing - is performed as an additive layer manufacturing (ALM) method, wherein the three-dimensional object is created layer by layer.

Additive layer manufacturing is generally performed by selectively sintering thermoplastic powders or by selectively polymerizing monomers or oligomers by chemical activation or irradiation. For chemical activation, an activator is selectively printed on the layer of a liquid or solid monomeric or oligomeric precursor and starts a chemical polymerization reaction to form duroplastic material in the regions it contacts the monomeric or oligomeric precursors. A radiation induced activation of the monomeric or oligomeric precursors is usually achieved by photopolymerization which is induced by UV- or IR-irradiation. The irradiation is applied regioselectively with stereolithography or laser beams.

Additive manufacturing processes are widely used to produce prototypes, samples, models and full scale objects. The objects can be of almost of any shape or geometry and are produced by forming successive layers of material under computer control. Additive manufacturing is often divided into different categories: Binder jetting, direct energy deposition, extrusion deposition, material jetting, powder bed fusion, sheet lamination and photo polymerization.

A very versatile and cost-effective process is the powder bed fusion, which uses a power beam, such as a laser or electron beam, to selectively sinter powdered material. Specific embodiments of powder bed fusion are selective laser sintering (SLS) or electron-beam melting. Powder bed fusion is usually conducted by providing a continuous bed of a powdered, usually polymeric thermoplastic material, over a support member in a sintering chamber. A power beam is used to selectively sinter the powdered material in selected regions of the powder bed by scanning across the surface of the powder bed. The power beam is controlled to produce the desired pattern according to cross-sections generated from a 3D model, such as a CAD file, of the article. The sintering chamber is usually heated so as to pre-heat the powdered material in the powder bed to temperatures only slightly below the melting point of the powdered material, thereby reducing the energy input of the power beam to melt the powder in the selected regions. Thus, thermal degradation, particularly overheating in the sintering regions, of the polymeric material is prevented.

After each cross-section is scanned and the melted powder has solidified, the substrate the lowered by one layer thickness, which is usually in the order of 0.1 mm, to prepare for growth of the next layer. Another layer of the powder is applied on top of the preceding layer in preparation for sintering. The process is repeated until the article is completed. Thus, as the process proceeds, the sintered article is constructed and supported by unconsolidated powder. After the article has been completed, it is removed from the substrate and the unconsolidated powder is typically recycled to produce another article by the same additive manufacturing process. Powder bed fusion may be used to produce shaped articles from powders of metals, ceramics, glasses, thermoplastic polymers, and most recently precursors of duroplastic materials.

If thermoplastic polymers are used for powder bed fusion processes, usually polyamides, such as nylon (polyamide 6,6, PA 66), polyamide 11 or polyamide 12, are used. Polyamides are preferably used since they are readily available and can be kept at temperatures only slightly below the melting point of the polymer without degradation. This means that the power beam used to sinter a powder of a thermoplastic polyamide has to raise the temperature in the powdered material only a few degrees to effect melting and, thus sintering of the polymer, which saves energy and costs.

Furthermore, most polyamides, particularly nylon (PA 6,6) has a re-solidification temperature significantly lower than its melting temperature. This means that the powder bed process can be easily conducted in temperature ranges between the melting point and the re-solidification temperature of the thermoplastic polymer without requiring any support structures for the article produced since the articles to be produced are not subjected to mechanical stress in the course of the process.

However, polyamides, particularly nylon, are unsuitable for many engineering applications due to their relatively low strength, their relatively low resistance to chemical attack and their relatively susceptibility to UV degradation compared to high-performance engineering thermoplastics.

Furthermore, the relatively low glass temperature of polyamides means that their continuous service temperature is usually in the range of approximately 60 to 90 °C, which makes these materials unsuitable for many engineering applications. Engineering plastics exhibit superior mechanical and thermal properties in a wide range of application conditions. Particularly, industrial applications with demanding material requirement, for example applications in the aerospace industry, make use of high-performance engineering thermoplastics. Some examples of high-performance engineering thermoplastics currently used in the aerospace industry include polyetheretherketones (PEEK), polyetherketones (PEK) and polyetherimides (PEI).

Because of the enhanced properties components comprising high-performance thermoplastic materials it has been tried to use high-performance thermoplastic polymers in selective sintering processes. However, there is the problem that many high-performance thermoplastic materials do not only have a high melting temperature, and therefore require processing at higher temperature, but they also have a re-solidification temperature only just below the melting temperature.

For example, in the case of PEEK, the material which is particularly suitable for aerospace and medical device applications, the re-solidification temperature can be less than 1 °C below the melting temperature, which is approximately 375 °C. If a high-performance thermoplastic material, such as PEEK, is selectively sintered in a heated sintering chamber in a classic selective sintering process, the article is subjected to mechanical stress due to the small temperature gap between the melting point and the re-solidification point which makes it very difficult to obtain formstable objects.

Producing an article by additive manufacturing, particularly a selective sintering process, furthermore can take a long time in the case of high-performance thermoplastic materials. The typical progress rate may be of the order of 0.1 kg/hr. Therefore, even relatively small articles can take several hours to produce. PEEK and other high-performance thermoplastic materials are susceptible to a thermal aging due to shortening of the polymer chain length, and so maintaining PEEK material at high temperatures for extended periods of time has adverse consequences on its material properties. In particular, the fracture toughness of PEEK is significantly reduced by thermal aging.

Thus, it is very difficult to produce an article from high-performance thermoplastic polymer, particularly from PEEK, by selective sintering processes without significant degradation in the thermoplastic material's properties. Moreover, the powder material, which is normally recycled for use in producing a subsequent article, will probably need to be discarded as the thermal aging effects of a further process would reduce the fracture toughness of the material yet further. The high material wastage adds significantly to the unit cost for each article produced.

However, since high-performance thermoplastic materials have - compared with standard polyamides - significantly enhanced properties, attempts have been made to modify selective sintering processes to adapt them to high-performance thermoplastic polymers.

WO 2012/160344 A1 discloses a method for a selective sintering process, particularly selective laser sintering process, for high-performance polymers, particularly PEEK, at temperatures well below the melting and re-solidification temperature of the thermoplastic material. Thus, thermal degradation of the sintered material is avoided, on the one hand, and the unsintered powder can be reused, on the other hand. The mechanical stress on the object due to the low temperature in the sintering chamber is avoided or minimized, respectively, by sintering a support structure in the powder bed before each layer of the object is sintered.

However, WO 2012/160344 A1 only solves one specific problem connected with the use of high-performance polymers in selective sintering processes. A further, general problem of selective sintering processes is that the polymeric powder used for the sintering process is usually obtained directly from synthesis. The particles of the powder are obtained in the form of granules, for example in case of polyamides, or flakes, for example in case of PEEK.

Flakes and granules directly from the synthesis of the thermoplastics have a very porous structure and can be easily comminuted to particle sizes of about 50 µm which is suitable for most sintering processes. However, the bulk density of the powder is very low due to the high porosity of the thermoplastic material and is usually about 0.31 g/cm³. The low bulk density is connected with disadvantages in the sintering process. First, the heat transfer between the particles of the powder is very poor, which results in an incomplete and insufficient melting of the particles and, therefore, an inferior connecting between the particles and sintered layers of the article, and also the density of the powder is very low which leads to dimensional inaccuracies in the resulting article. Second, the density of the article does not correspond to the specific density of the polymeric base material, the objects are porous and their surface is rugged. Thus, the obtained articles have fuzzy edges and are susceptible to mechanical stress.

Furthermore, modifications of the sintered product can only be achieved due to modification of the polymers, particularly by modifying the polymeric backbone of the thermoplastic material. This specifically relates to the molecular weight, the rheological properties and the melting point.

In principle, compounding high-performance polymers in a compounder provides the opportunity to modify the properties of the thermoplastic material and adapt it to the needs of the process.

The granules obtained from a compounder in the form of a half finished product possess the specific density of the polymeric base material. By grinding, particularly cryogenic grinding, a homogeneous dense powder can be obtained, which is at least in theory suited to create shaped articles with enhanced mechanical properties with selective sintering methods.

However, in case of high-performance polymers, the strength of the material is so high - for example the tensile strength is above 90 MPa - that mechanical comminution is nearly impossible. Therefore, the powder obtained after the grinding of high-performance polymers contains only a small fraction of particles with the desired particle sizes, on the one hand, and the energy input during the grinding operation is disproportionally high, on the other hand, for example about 2,000 kWh/t. Thus, the production costs of a powder of a high-performance polymer are extremely high.

If mechanically comminuted high-performance polymeric powders are processed in laser sintering processes, the bulk density of the powder in the sintering chamber is much higher compared to the use of the porous powders directly obtained from the synthesis. However, the high melting temperatures of high-performance thermoplastics require for these powders a very high energy input through the power beam, particularly a laser beam. This, in addition to the mechanical stress on the object, as mentioned above, also intensifies a general problem connected with the energy input in fused bed sintering processes: Modern CO₂-laser scanner systems move very rapidly. The application time of the laser beam on a specific area of the powder is only about 6.6•10⁻⁵ seconds. Moreover, the energy is mainly applied on the surface of the powder layer and has to be spread from there through the whole layer. Therefore, to achieve a sufficient melting of the powder, the energy input of the laser has to be high or multiple scans have to be conducted. A high energy input results in overheating of the surface of the powder layer and effects thermal degradation of the thermoplastic materials, whereas lower layers of the powder are not affected by the energy.

Multiple scans with less power of the laser beam slow down the production and also do not result in a complete melting of the powder.

Thus, the sintering process between the layers of the article remains unfinished. Therefore, the fused bed sintering processes of high-performance thermoplastic polymers usually result in porous articles, too. This problem is further enhanced, if the porous powders are used that are obtained directly from the synthesis of the polymers.

Thus, there is still a need for a thermoplastic material which can be specifically adapted to the needs of additive manufacturing processes and which can be processed to articles that make full use of the enhanced properties of high-performance polymers.

The present invention is now based on the object of providing a new thermoplastic material for use in powder bed fusion processes, which at least largely avoids or else at least attenuates the disadvantages associated with the conventional thermoplastic materials.

A further object of the present invention lies in the provision of a thermoplastic material suitable for powder bed fusion processes which has a high bulk density and allows for good heat transfer.

A further object of the present invention is to provide an object or article, respectively, produced by an additive manufacturing process which has enhanced thermal and mechanical properties compared to the respective objects of the prior art.

For the solution of the problem outlined above, the present invention therefore proposes, according to a first aspect of the invention, a composite material as claimed in Claim 1; further, advantageous embodiments are subject of the relevant subclaims.

The present invention further provides, according to a second and a third aspect of the present invention, for the use of a composite material in additive manufacturing methods according to Claim 15 and Claim 16, respectively.

Furthermore, the present invention provides, according to a fourth aspect of the present invention, a process for preparing a composite material according to Claim 17; further, advantageous embodiments are subject of the relevant subclaims.

Further provided by the present invention are according to a fifth aspect of the present invention shaped articles according to Claim 20.

It will be readily understood that characteristics, features, versions and embodiments, and also advantages or the like, which are recited hereinbelow in respect of one aspect of the invention only, for the avoidance of unnecessary repetition, self-evidently also apply *mutatis mutandis* in respect to the other aspects of the invention, without the need for an express mention.

It will be further readily understood that any values, numbers or ranges recited hereinbelow shall not be construed as limiting the respective value, number and range recitations; a person skilled in the art would appreciate that in a particular case or for particular use, departures from the recited ranges and recitations are possible without departing from the realm of the present invention.

In addition, any value/parameter, particulars or the like recited hereinbelow can in principle be determined using standardized or explicitly recited methods of determination or else using methods for determination that are familiar per se to the person skilled in the art.

Furthermore, it is self-evident that all weight-based or quantity-based percentages will be selected by the person skilled in the art in such a way as to result in a total of 100 %; this, however, is self-evident.

Subject to the above, the present invention is now described in more detail.

Subject-matter of the present invention - according to a **first** aspect of the present invention - is therefore a composite material comprising
(a) at least one thermoplastic polymer and
(b) a particulate inorganic material,
wherein the composite material is particulate matter.

For, as applicant has surprisingly found, it is possible to compound thermoplastic materials, particularly high-performance thermoplastic materials, such as PEEK, PEK or PPS, with a particulate inorganic material and the resulting composite material has drastically enhanced properties in additive manufacturing processes, particularly in fused bed sintering processes.

The composite material according to the invention has a much higher bulk density and heat transfer rate in comparison to thermoplastic powders, particularly powders of high-performance polymers, conventionally used for fused bed sintering processes. Thus, the composite material according to the invention allows for a much faster and enhanced fabrication of three-dimensional articles with additive manufacturing methods, particularly sintering methods.

Compounding a thermoplastic material, particularly a high-performance thermoplastic material, with particulate inorganic material enhances the heat-storing capacity of the resulting composite material in comparison to the unmodified thermoplastic material. The increase in heat capacity makes it possible to comminute even high-performance thermoplastic materials, such as PEEK, PEK or PPS, particularly by cryogenic grinding.

As applicant surprisingly has found, high-performance thermoplastic materials which are modified with inorganic particulate materials, for example magnetite, show unchanged mechanical characteristics compared to unmodified high-performance thermoplastics, but can be comminuted at much higher process speeds and with higher throughputs.

Moreover, the particle size distribution of the polymeric powder obtained after the comminution is drastically reduced in comparison to an unmodified high-performance polymer and the particle size distribution can be adjusted to fixed values. Thus, the present invention makes it possible for the first time, to comminute high-performance polymers, such as PEEK, PEK or PPS, at reasonable economic costs.

The composite material according to the present invention shows its advantages particularly in cryogenic grinding operations. Due to the higher heat capacity of the modified high-performance polymer according to the invention, the inventive composite material retains low temperatures down to -193 °C much longer than unmodified polymers. The cold granules of the inventive composite material are dosed into a mill and hit the pegs of the mill at high velocity which results in a comminution of the granules. The impact of the granules with the pegs usually results in a rapid warming of the granules so that the debris of the granules show viscoelastic properties on their next encounter with the pegs. This results in an incomplete comminution of the granules and a large part of particles with a big particle size in the resulting powder.

The inventive composite material with its specifically enhanced heat capacity is apparently comminuted much more effectively, since it retains the low temperature much longer. The inventive composite material is brittle for a longer time and can be comminuted by mechanical means much more easily.

A further advantage of the enhanced heat capacities of the inventive composite material is a homogeneous melting of the polymeric material during laser sintering processes. Particularly, the present invention allows for the first time a full melting of high-performance polymers, such as PPS, PEK or PEEK in selective sintering, particularly selective laser sintering, processes. Thus, the inventive composite material allows for a full melting of the particles and layers during the sintering process and not only for a superficial melting of the particles which results in the particles being adhered to each other only. According to the invention, it is possible to obtain a completely homogeneous object with no particles or layers being detectable on a microscopic scale.

Without being bound to this theory, the enhanced properties can be attributed to compounding the thermoplastic material with the inorganic particulate material in the inventive composite material, particular magnetite, since the resulting higher heat capacity of the composite material apparently results in a more homogeneous distribution of the energy input by a laser, particularly, if CO₂ lasers with only a short scanning time are used.

Compared to unmodified thermoplastics, the sintering time of the inventive composite materials is prolonged, and the heat is spread homogeneously and for a prolonged time.

A complete sintering, i.e. a complete melting, of the thermoplastic material and high density articles with higher tensile strengths are the result, if the inventive composite material is used.

A further drawback of high-performance polymers with a high melting point is that thermoplastic polymers with a high melting point often show an inferior adsorption of CO₂ laser irradiation, which is the standard laser scanner system used for additive manufacturing, particularly sintering, processes. The inorganic particulate material, in particular magnetite, apparently enhances not only the specific heat capacity of the polymeric material, but also the absorption of radiation energy at 10.6 µm wavelengths.

Moreover, as applicant has surprisingly found, the observed effects as to comminution and processing of the composite material is independent from the polymeric material. However, the observed effects are the more powerful the higher the polymeric material ranks in the materials performance pyramid.

The composite material according to the invention is most effective, if high-performance polymers are used. High-performance polymers, particularly high-performance engineering polymers, have a high tensile strength, a high melting point and their rheological properties are problematic and, furthermore, their absorption of CO₂ laser energy is very low. This specifically applies for high-performance engineering thermoplastic materials, such as PPS, PEEK, PEK, PEI etc.

The inventive composite material is furthermore well suited for processing with diodes or fiber lasers which are used in the latest concepts for laser sinter processes.

Furthermore, the inventive composite material is also suited for new sintering strategies since it allows to laser sinter polymers at much lower temperatures in the sintering chamber, so that the temperature gap between the melting temperature of the polymeric material and the temperature of the powder in the sintering chamber is quiet high. With the inventive composite material multiple scans can be avoided since the energy is much more effectively absorbed and distributed in the powder bed, which results in a dramatic increase in processing speed and a complete melting of the powdered material during the sintering process.

In general, the particulate inorganic material has a heat capacity of less than 1,000 J(kg•K), particularly less than 900 J/(kg•K), preferably less than 800 J/(kg•K), more preferably less than 600 J/(kg•K).

Furthermore, it is possible that the particulate inorganic material has a heat capacity in the range of from 100 to 1,000 J/(kg•K), particularly 200 to 900 J/(kg•K), preferably 300 to 800 J/(kg•K), more preferably 400 to 600 J/(kg•K).

If the particulate inorganic material has a heat capacity which corresponds to the abovementioned values or ranges, respectively, the heat capacity of the thermoplastic polymer can be increased with only small amounts of the particulate inorganic material in the resulting composite material. This results in the composite material having the same mechanical characteristics as the unmodified thermoplastic polymer, on the one hand, and a much enhanced processability, both in comminution and sintering processes, on the other hand.

According to a preferred embodiment of the present invention, the inorganic particulate materials increases the heat capacity of the composite material by at least 10 %, particularly at least 20 %, preferably at least 30 %, based as compared to the heat capacity of the thermoplastic polymer.

Moreover, it is possible according to the present invention that the inorganic particulate material increases the heat capacity of the composite material by a range of from 10 to 50 %, particularly 20 to 45 %, preferably 30 to 40 %, compared to the heat capacity of the thermoplastic polymer.

According to the invention, the composite material usually has a particle size in the range of from 5 to 100 µm, particularly 10 to 80 µm, preferably 15 to 70 µm, more preferably 20 to 50 µm.

According to the invention, it is also possible that the composite material has a mean particle size of 10 to 70 µm, particularly 20 to 60 µm, preferably 30 to 50 µm, more preferably 35 to 40 µm. It is a specific feature of the present invention that a powder of the inventive composite material is obtainable even if high-performance polymers, such as PEEK, PEK or PPS, are used. Usually, it is not possible to comminute high-performance polymers properly so as to obtain a rather homogeneous particle size distribution which results in a powder that can be used for laser sintering processes.

According to a preferred embodiment of the present invention, the composite material is obtained by comminuting solid composite material. In this regard, it is preferred, if the composite material is comminuted by grinding, particularly by cryogenic grinding. Particularly in regard to high-performance polymers, the present invention allows for an effective comminution of the compounded composite material by grinding, particularly by cryogenic grinding. Due to the increased heat capacity of the composite material according to the invention, the material remains for a longer period of time at very low temperatures down to -193 °C during the grinding process. At these low temperatures, the high-performance polymers do not show any viscoelastic properties, but are brittle and can be easily grinded.

The particle size of the particulate inorganic material can vary in wide ranges depending on the application conditions. However, good results are obtained, if the particulate inorganic material has particle sizes in the range of from 1 to 20 µm, particularly 2 to 15 µm, preferably 3 to 12 µm, more preferably 4 to 10 µm.

Moreover, it is possible that the particulate inorganic material has a mean particle size in the range of from 2 to 15 µm, particularly 3 to 12 µm, preferably 4 to 10 µm, more preferably 5 to 8 µm.

Particulate inorganic material with the aforementioned particle sizes is small enough to be homogeneously distributed and blended in a thermoplastic material, particularly without changing the mechanical characteristics of the thermoplastic material, but allows for a significant increase of the heat capacity of the resulting composite material in comparison with the unmodified thermoplastic material.

The particulate inorganic material is usually selected from the group consisting of metals, inorganic oxides and their mixtures.

In this regard, very good results are obtained, if the particulate inorganic material is selected from the group consisting of iron, steel, aluminum, titanium dioxide, zinc oxide, iron oxides, alumina, glass and their mixtures.

Particularly, very good results are obtained, if the particulate inorganic material is selected from the group consisting of iron oxides, particularly magnetite, glass, particularly glass beads, and their mixtures.

According to a preferred embodiment of the present invention, the particulate inorganic material is magnetite. Magnetite is a mixed oxide of Fe²⁺ and Fe³⁺ ions with the chemical formula Fe₃O₄. Magnetite is a readily available, low cost iron oxide that can be easily processed.

In regard to the amount of particulate inorganic material in the inventive composite material, these amounts can vary in very wide ranges depending on the application conditions. However, very good results are obtained, if the composite material contains the particulate inorganic material in amounts of up to 25 % by weight, particularly up to 20 % by weight, preferably up to 18 % by weight, more preferably up to 17 weight%, based on the weight of the composite material.

Moreover, it is preferred, if the composite material contains the particulate inorganic material in amounts of 1 to 20 % by weight, particularly 2 to 10 % by weight, preferably 3 to 7 % by weight, more preferably 3 to 4 % by weight, based on the weight of the composite material. The aforementioned amounts of particulate inorganic material in the inventive composite material do not adversely effect the mechanical characteristics of the thermoplastic material, but decisively enhance the heat capacity of the resulting composite material compared to the unmodified thermoplastic material.

As already delineated above, the composite material according to the invention is preferably characterized by a high bulk density. Preferably, the composite material has a bulk density in the range of from 0.2 to 1.0 g/cm³, particularly 0.3 to 0.9 g/cm³, preferably 0.4 to 0.8 g/cm³, more preferably 0.5 to 0.7 g/cm³. Thus, the composite material according to the invention provides a much denser powder bed compared to conventional thermoplastic materials, which results in much better sintering properties and non-porous articles with higher breaking strength.

According to a preferred embodiment of the present invention, the polymer is a high-performance polymer, particularly a high-performance engineering polymer.

According to the invention, it is preferred, if the polymer is selected from the group consisting of polyetherketone (PEK), polyetheretherketone (PEEK), polyphenylene sulfide (PPS), polyamid-imide (PAI), polysulfone (PSU), polyether sulfone (PES), polyphenylsulfone (PPSU) or their blends. According to the invention, it is preferred, if the polymer selected from the group consisting of polyetherketone (PEK), polyetheretherketone (PEEK), polyphenylene sulfide (PPS) and their blends. The present invention provides composite materials with enhanced thermal and mechanical properties, particularly, if high-performance polymers are used as the thermoplastic polymer for the inventive composite material. High-performance polymers usually have a very high melting point, hardly absorb laser radiation and have problematic rheological properties. All these problems can be overcome with the inventive composite material.

According to a further preferred embodiment of the invention, the composite material comprises the polymer in amounts of up to 99 % by weight, particularly up to 95 % by weight, preferably up to 90 % by weight, more preferably up to 85 % by weight, even more preferably up to 70 % by weight, based on the weight of the composite material.

Moreover, it is possible that the composite material comprises the polymer in amounts of 40 to 99 % by weight, particularly 50 to 95 % by weight, preferably 55 to 90 % by weight, more preferably 60 to 85 % by weight, even more preferably 65 to 70 % by weight, based on the weight of the composite material.

Furthermore, it is possible that the composite material comprises at least one filler. Very good results are obtained, if the composite material comprises a filler selected from the group consisting of carbon nanotubes, fibers, preferably carbon fibers, glass fibers, silica, inorganic carbonates, particularly calcium carbonate, inorganic sulfates, particularly barium sulfate, and their mixtures. By adding a further filler or further fillers to the inventive composite material, the mechanical properties of the composite material as well as of objects obtained by additive manufacturing processes can be selectively enhanced. Particularly, the incorporation of carbon nanotubes or fibers enhances the tensile strength of both the composite material as well as objects formed thereof.

If the composite material comprises a further filler, it is possible that the composite material comprises the filler in amounts of 1 to 30 % by weight, particularly 5 to 25 % by weight, preferably 7 to 20 % by weight, more preferably 10 to 15 % by weight, based on the weight of the composite material.

According to a further embodiment of the present invention, the composite material comprises at least one additive.

If the composite material comprises an additive, very good results are obtained, when the additive is selected from the group consisting of processing aids, surfactants, pigments, dyes, plasticizers and stabilizers, particularly UV stabilizers, and their mixtures.

The amount of additives in the inventive composite material can vary in wide ranges. However, very good results are obtained, if the composite material comprises the additive in amounts of 0.1 to 15 % by weight, particularly 0.5 to 10 % by weight, preferably 1 to 7 % by weight, more preferably 2 to 5 % by weight, based on the weight of the composite material.

Usually, the composite material according to the invention is a semi-finished product. Particularly, the composite material according to the invention is not a powder blend, but a composite material. Powder blends of for example thermoplastic polymers with glass beads or metal particles or inorganic oxides are known in the art. However, these powder blends usually contain very high amounts of inorganic material and only very low amounts of the thermoplastic material since the organic material is only used to produce the green body of the finished object. The green body is sintered at high temperatures - usually above 1,000 °C - and the organic material is removed during the sintering process. In very contrast to this, according to the invention, a composite material comprising a thermoplastic polymer and a particulate inorganic material is provided.

In the figures:
- Fig. 1: an apparatus for selective laser sintering that is suited to carry out the inventive method for obtaining a shaped article; and
- Fig. 2: shows a shaped article consisting of magnetite-modified PPS obtained from the inventive composite material with selective laser sintering (SLS).

According to a **second** aspect of the present invention, the present invention relates to the use of a composite material as described before in additive manufacturing methods.

According to a preferred embodiment of the present invention, the additive manufacturing method is selective laser sintering (SLS).

According to another preferred embodiment of the present invention, the additive manufacturing method is a extrusion based 3D printing method, particularly fused filament fabrication (FFF).

For further details in regard to the inventive use of a composite material, reference is made to the above description of the further aspects of the present invention which also apply in regard to the inventive use.

A further aspect of the present invention - according to a **third** aspect of the present invention - is the use of a composite material as described above in the manufacture of an object with additive manufacturing methods.

For further details in regard to the inventive use of a composite material, reference is made to the above description of the further aspects of the present invention which also apply in regard to the inventive use.

A further aspect of the present invention - according to a **fourth** aspect of the present invention - is a process for preparing a composite material as described above, wherein
(i) in a first process step a starting material comprising
   (a) at least one thermoplastic polymer and
   (b) a particulate inorganic material
      is blended at temperatures above the melting temperature of the polymer and
(ii) in a subsequent second process step the material obtained in process step (i)
   is comminuted, particularly by grinding.

According to a preferred embodiment of the present invention, in the first process step (i) the starting material is extruded, particularly with a screw extruder. Very good results are obtained according to the invention, if the starting material is extruded with a twin screw extruder.

By blending the at least one thermoplastic polymer and the particulate inorganic material, as well as further components listed above, above the melting temperature of the thermoplastic polymer and extruding the obtained material a composite material is obtained. The composite material obtained with the inventive process cannot be compared to a powder blend of for example a thermoplastic polymer and inorganic particles. According to the invention, the particulate inorganic material is embedded in the thermoplastic polymer.

Furthermore, according to the invention, it is preferred, if in the second process step (ii) the composite material is comminuted by cryogenic grinding.

In this regard, it is preferred, if the composite material is cooled with liquid nitrogen, particularly prior to the grinding operation.

Very good results are obtained in the course of the present invention, if the material is cooled to temperatures below the glass transition temperature of the thermoplastic polymer.

If the composite material is comminuted by cryogenic grinding, the material is usually cooled to temperatures below -50 °C, particularly -100 °C, preferably -150 °C, more preferably -190 °C.

Moreover, it is possible that the composite material is cooled to temperatures in the range of from -50 to -196 °C, particularly -100 to -196 °C, preferably -150 to - 195 °C, more preferably -190 to -195 °C.

At low temperatures the thermoplastic polymer, even a high-performance thermoplastic polymer, does not show any viscoelastic properties, but is brittle and can be comminuted easily. Moreover, due to the high heat capacities of the inventive composite material, the inventive composite material warms much slower compared to unmodified thermoplastic materials and thus, can be comminuted much more easily by grinding processes.

Particularly in regard to high-performance polymers, it is usually not possible to obtain a homogeneous distribution of fine particles from a high-performance polymer, i.e. fine particles with a narrow particle size distribution.

The particle sizes to which the composite material is comminuted, can vary in wide ranges and strongly depend on the application conditions. However, very good results are obtained, if in the second process step (ii), the composite material is comminuted to obtain a particulate composite material having particle sizes of less than 100 µm, particularly less than 80 µm, preferably less than 70 µm, more preferably less than 50 µm.

Moreover, it is possible and also preferred according to the invention, if in the second process step (ii), the composite material is comminuted to obtain a particulate composite material having particle sizes in the range of 5 to 100 µm, particularly 10 to 80 µm, preferably 15 to 70 µm, more preferably 20 to 50 µm.

Moreover, it is possible that in the second process step (ii), the composite material is comminuted to obtain a particulate composite material having a mean particle size in the range of from 10 to 70 µm, particularly 20 to 60 µm, preferably 30 to 50 µm, more preferably 35 to 40 µm.

For further details in regard to the inventive process, reference is made to the above descriptions of the further aspects of the present invention which also apply in regard to the inventive process.

A further aspect - according to a **fifth** aspect of the present invention - is a shaped article obtained by processing a composite material as described above with an additive manufacturing method, particularly an additive layer manufacturing method.

According to a preferred embodiment of the present invention, the additive manufacturing method is selective laser sintering (SLS).

If the shaped article is obtained by selective laser sintering, the shaoed article is preferably obtained by a process, wherein
(A) in a first process step, a layer of a particulate polymeric material comprising a composite material as described above in the form of a powder bed is provided,
(B) in a subsequent second process step, the layer of the particulate polymeric material is selectively sintered and
(C) in subsequent third process step, a layer of the particulate polymeric material is deposited on the sintered structure,
wherein the second (B) and the third (C) process steps are repeated so as to form a shaped article.

In this regard it is preferred, that the powder bed in the first process step (A) is provided at a temperature in the range of from 15 to 50 °C, particularly 15 to 40 °C, preferably 20 to 30 °C. Thus, the temperatures of the powder bed and in the construction field are usually kept at room temperature or slightly above.

In very contrast to the inventive method, the temperature of the powder bed and the construction field in conventional methods for selective laser sintering of thermoplastic materials is only slightly below the melting temperature at the thermoplastic material.

According to another preferred embodiment of the present invention, the additive manufacturing method is an extrusion based 3D printing method, particularly fused filament fabrication (FFF). The composite material according to the invention is specifically suited for application in extrusion based 3D printing methods since due to the high heat capacity of the inventive composite material subsequent layers of molten composite material form a homogeneous and uniform shaped article. Thus, due to the use of the inventive composite material the layers that form the shaped article of the invention are not visible. The shaped article of the invention consists of a homogeneous material.

For further details with regard to the inventive shaped article, reference is made to the above descriptions in regard to the other aspect of the present invention, which also apply in regard to the shaped article.

The subject-matter of the present invention is further illustrated with the aid of the figures and the examples displaying preferred embodiments of the present invention, without limiting the present invention to these embodiments.

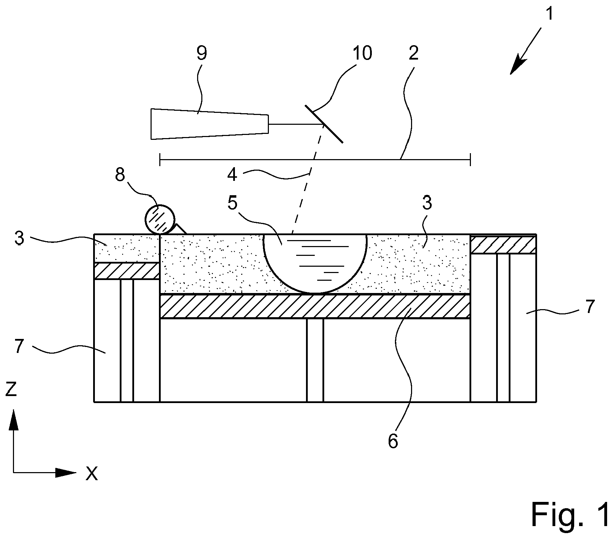

Fig. 1 shows a cross section of an apparatus 1 for creating three-dimensional articles with selective laser sintering in a xz plain.

For carrying out the inventive process, a thin layer of a composition 3 consisting of the inventive composite material or comprising the inventive composite material is provided on the construction field 2. The composition 3 is sintered by regioselective irradiating the construction field 2 with a laser beam 4 generated in means for generating laser beams 9. The laser beam 4 generated in the means for generating laser beams 9 is deflected with the deflection means 10, so that a pattern of melted thermoplastic material is obtained in the layer of the composition 3.

Afterwards, the construction field is lowered at least slightly with the motion of the piston 6 and further composition 3 is provided from stocking means 7. The further composition 3 is spread with the spreading means 8, e.g. a roll, in the form of a thin layer on the construction field. Therefore, a new layer of composition 3 is provided, which is irradiated. Excess composition 3 is stored in the opposing stocking means 7. The new layer of composition 3 is regioselectively sintered with laser beams 4, creating a new layer of melted thermoplastic material which due to the high heat-capacity of the inventive composite material forms a one-phase system with the previously formed layer. By repetition of these process steps, a three-dimensional article 5 is created.

### Examples

A mixture comprising 96 % by weight polyphenylene sulfide (PPS) and 4 % magnetite is fed into a compounder and extruded to form a homogenous composite material. The extrudates are further processed to pellets which are subjected to cryogenic milling at -196 °C. A homogeneous fine powder of dark grey to black color with particle sizes in the range from 8 to 70 µm is obtained.

To examine the inventive composite material in regard to its use in additive manufacturing methods for obtaining articles from high-performance polymers, test articles with a size of 100 x 70 x 35 mm are produced via selective laser sintering (SLS) with the above described composite material. For this purpose, the inventive composite material is provided in a selective laser sintering device and the test articles are produced layer by layer by exposure to the beam of a CO₂ laser.

The thickness of each layer of composite material is 0.1 mm and, thus, 350 layers are required for the test objects with a height of 35 mm. The bed temperature of the selective laser sintering device is 230 °C and the feed temperature for the inventive composite material is 140 °C. Each layer is subjected to the laser beam with a scan speed of 500 inch/sec and a laser power of 50 W. This laser fill scan spacing is 0.12 mm.

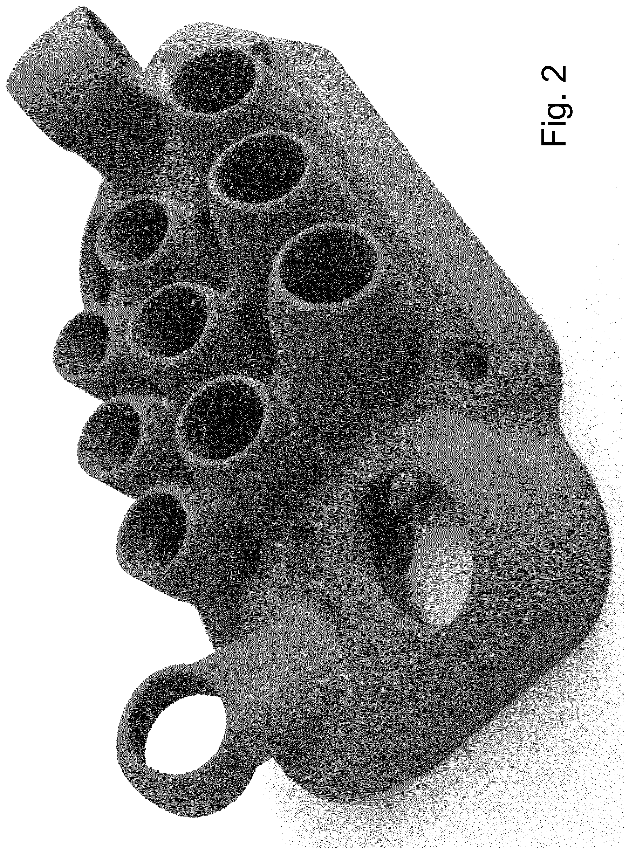

Fig. 2 depicts one of the test articles. It is obvious from Fig. 2 that a homogenous three-dimensional object has been produced from the magnetite-modified PPS. The article has a rough surface, but is non-porous and no the single layers can be detected in the article. The use of the inventive composite material results in a homogenous and completely sintered three-dimensional article.

### Reference signs

- 1: apparatus
- 2: construction field
- 3: composition
- 4: laser beam
- 5: article
- 6: piston
- 7: storing means
- 8: spreading means
- 9: means for generating laser beams
- 10: deflection means

## Claims

1. Composite material comprising
(a) at least one thermoplastic polymer and
(c) a particulate inorganic material,
wherein the composite material is particulate matter.

2. Composite material according to claim 1, wherein the particulate inorganic material has a heat capacity in range of from 100 to 1,000 J/(kg•K), particularly 200 to 900 J/(kg•K), preferably 300 to 800 J/(kg•K), more preferably 400 to 600 J/(kg•K).

3. Composite material according to claim 1 or 2, wherein the inorganic particulate material increases the heat capacity of the composite material by at least 10 %, particularly at least 20 %, preferably at least 30 %, compared to the heat capacity of the thermoplastic polymer.

4. Composite material according to any of the preceding claims, wherein the composite material has a particle size in the range of from 5 to 100 µm, particularly 10 to 80 µm, preferably 15 to 70 µm, more preferably 20 to 50 µm.

5. Composite material according to any of the preceding claims, wherein the composite material has a mean particle size of 10 to 70 µm, particularly 20 to 60 µm, preferably 30 to 50 µm, more preferably 35 to 40 µm.

6. Composite material according to any of the preceding claims, wherein the particulate inorganic material has particle sizes in the range of from 1 to 20 µm, particularly 2 to 15 µm, preferably 3 to 12 µm, more preferably 4 to 10 µm.

7. Composite material according to any of the preceding claims, wherein the particulate inorganic material is selected from the group consisting of metals, inorganic oxides and their mixtures.

8. Composite material according to claim 7, wherein the particulate inorganic material is selected from the group consisting of iron, steel, aluminum, titanium dioxide, zinc oxide, iron oxides, alumina, glass and their mixtures.

9. Composite material according to any of the preceding claims, wherein the composite material contains the particulate inorganic material in amounts of up to 25 % by weight, particularly up to 20 % by weight, preferably up to 18 % by weight, more preferably up to 17 % by weight, based on the weight of the composite material.

10. Composite material according to any of the preceding claims, wherein the composite material contains the particulate inorganic material in amounts of 1 to 20 % by weight, particularly 2 to 10 % by weight, preferably 3 to 7 % by weight, more preferably 3 to 4 % by weight, based on the weight of the Composite material.

11. Composite material according to any of the preceding claims, wherein the composite material has a bulk density in the range of from 0.2 to 1.0 g/cm³, particularly 0.3 to 0.9 g/cm³, preferably 0.4 to 0.8 g/cm³, more preferably 0.5 to 0.7 g/cm³.

12. Composite material according to any of the preceding claims, wherein the polymer is a high-performance polymer.

13. Composite material according to any of the preceding claims, wherein the polymer is selected from the group consisting of polyetherketone (PEK), Polyetheretherketone (PEEK), polyphenylene sulfide (PPS), polyamid-imide (PAI), polysulfone (PSU), polyether sulfone (PES), polyphenylsulfone (PPSU) or their blends, particularly polyetherketone (PEK), Polyetheretherketone (PEEK), polyphenylene sulfide (PPS) and their blends.

14. Composite material according to any of the preceding claims, wherein the composite material comprises the polymer in amounts of up to 99 % by weight, particularly up to 95 % by weight, preferably up to 90 % by weight, more preferably up to 85 % by weight, even more preferably up to 70 % by weight, based on the weight of the composite material.

15. Use of a composite material according to any of claims 1 to 14 in additive manufacturing methods.

16. Use of a composite material according to any of claims 1 to 14 in the manufacture of an object with additive manufacturing methods.

17. Process for preparing a composite material according to any of claims 1 to 14, wherein
(i) in a first process step a starting material comprising
(a) at least one thermoplastic polymer and
(b) a particulate inorganic material
is blended at temperatures above the melting temperature of the polymer and
(ii) in a subsequent second process step the material obtained in process step (i) is comminuted, particularly by grinding.

18. Process according to claim 17, wherein in the first process step (i) the starting material is extruded, particularly with a screw extruder.

19. Process according to claim 17 or 18, wherein in the second process step (ii) the composite material is comminuted by cryogenic grinding.

20. A shaped article obtained by processing a composite material according to any of claims 1 to 16 with an additive manufacturing method, particularly an additive layer manufacturing method.
